# EUROPEAN PATENT APPLICATION

(11) **EP 3 516 962 A1**
(43) Date of publication of application: **31.07.2019**
(21) Application number: 19153402.3
(22) Date of filing: 23.01.2019
(51) Int. Cl.: A21C 3/02

(54) **FOOD PREPARATION TOOL**

(30) Priority: 24.01.2018 US 201862621557 P; 09.01.2019 US 201916243086
(71) Applicant: Steffens, Gary M., Anchorage, AK 99504 (US)
(72) Inventor: Steffens, Gary M., Anchorage, AK 99504 (US)
(74) Representative: Global IP Europe Patentanwaltskanzlei

(57) **Abstract**

The present disclosure provides a food preparation tool for making trenches on a food item such as bread product. The tool includes a handle configured to be held by a user. A first roller configured with a plurality of first ridges is rotatably coupled to a first end of the handle. The first ridges are configured to form trenches on the food item upon application of pressure by the user on the food item via the first roller. A second roller configured with a plurality of second ridges is rotatably coupled to a second end of the handle. The second ridges are configured to form trenches on the food item upon application of pressure by the user on the food item via the second roller. The trenches prevent spillage of condiments from bread product thereby preventing food wastage, while also ensuring healthier and tastier product.

## Description

### TECHNICAL FIELD

The present disclosure relates generally to food preparation tools and, more particularly to, a tool for creating trenches or pockets on a bread product for allowing packing and encapsulation of fillings and condiments therein.

### BACKGROUND

Stuffed food products, like hamburgers and hot dogs, are among the most popular of food items, largely due to their ease and convenience. These stuffed food items include a wide range of food products including, but not limited to, bagels, sandwiches, submarine sandwiches, hot dogs, stuffed pizzas, pies, hamburgers, calzones, tarts, empanadas, etc. Such stuffed food items are generally prepared by having bread bun or similar baked products with top and bottom portions that are separated from one another and having a filling disposed between the two portions of the bread bun. The filling (s) may be of various compositions, depending upon the desired food item as noted above. For example, a hamburger is one common sandwich with fillings including a ground beef patty, vegetables and some other condiments disposed between two bread buns. In another example of hot dog buns, in addition to the tubular meat product, the filling(s) typically may comprise one or more of the following: chili, cheese, relish, pickles, sauerkraut, vegetables (e.g., onions, green peppers, mushrooms, etc.), ketchup, mustard, and the like.

In the production of bread and other baked products, generally, the bread is known to be shaped into slices of suitable substantially flat portions. When such flat portions of bread are used for making stuffed food items, these may fail to contain all the filling disposed between the two portions. The common drawback of these flatbread portions is that the fillings may often drip or seep from their edges, making the stuffed food items difficult to eat and resulting in food waste. Furthermore, the flat surfaces are a hindrance, in that they do not allow a large volume of fillings to be accommodated in the sandwich, as when such flatbread portions with large volume of fillings may be closed together for consumption, many of the condiments of the filling would fall or seep out of the edges of the sandwich.

Therefore, there is a need for techniques which can overcome one or more limitations stated above in addition to providing other technical advantages.

### SUMMARY

Various embodiments of the present disclosure provide a food preparation tool. The tool includes a handle configured to be held by a user. A first roller configured with a plurality of first ridges is rotatably coupled to a first end of the handle. The plurality of first ridges are configured to form a plurality of first trenches on a food item upon application of pressure by the user on the food item via the first roller. A second roller configured with a plurality of second ridges is rotatably coupled to a second end of the handle. The plurality of second ridges are configured to form a plurality of second trenches on the food item upon application of pressure by the user on the food item via the second roller.

In an embodiment of the present disclosure, the food preparation tool for a bread product is provided. The tool includes the handle configured with an arcuate shape and adapted to be held by a user. The first roller configured with a plurality of first ridges is rotatably coupled to the first end of the handle. The plurality of first ridges are configured to form a plurality of first trenches on the bread product upon application of pressure by the user on the bread product via the first roller. A first roller support member extends from the first end of the handle for rotatably coupling the first roller on the handle. The second roller configured with a plurality of second ridges is rotatably coupled to a second end of the handle. The plurality of second ridges are configured to form a plurality of second trenches on the bread product upon application of pressure on the bread product by the user via the second roller. A second roller support member extends from the second end of the handle for rotatably coupling the second roller.

In an embodiment of the present disclosure, the food preparation tool for the bread product is provided. The tool includes the handle having an arcuate shape and configured to be held by the user. The handle is configured with indentations for enhancing grip on the handle to the user and includes a first end and a second end. The first roller support member extends from the first end and, includes a first shank member mounted to the first end and a pair of first flanges extending from the first shank member. The pair of first flanges orients away from a longitudinal axis of the handle to form a fork-like structure. The first roller configured with a plurality of first ridges is rotatably coupled between the pair of first flanges via the axle. The plurality of first ridges is configured to form a plurality of first trenches on the bread product upon application of pressure by the user on the bread product via the first roller, wherein the first roller is inclined perpendicularly to the longitudinal axis of the handle. The second roller support member extends from the second end and, includes a second shank member mounted to the second end and a pair of second flanges extending from the second shank member. The pair of second flanges orients away from the longitudinal axis of the handle to form the fork-like structure. The second roller configured with a plurality of second ridges is rotatably coupled between the pair of second flanges via the axle, the plurality of second ridges configured to form a plurality of second trenches on the bread product food item upon application of pressure by the user on the bread product via the second roller, wherein the second roller is inclined perpendicularly to the longitudinal axis of the handle.

### BRIEF DESCRIPTION OF THE FIGURES

The following detailed description of illustrative embodiments is better understood when read in conjunction with the appended drawings. For the purpose of illustrating the present disclosure, exemplary constructions of the disclosure are shown in the drawings. However, the present disclosure is not limited to a specific device or a tool and instrumentalities disclosed herein. Moreover, those in the art will understand that the drawings are not to scale. Wherever possible, like elements have been indicated by identical numbers:
FIG. 1 is a front perspective view of a food preparation tool, in accordance with an example embodiment;
FIG. 2 is a rear perspective view of the food preparation tool of FIG. 1, in accordance with an example embodiment;
FIG. 3 is a front planar view of the food preparation tool, in accordance with another example embodiment;
FIG. 4 is a top planar view of the food preparation tool, in accordance with an example embodiment;
FIG. 5A is a perspective view of the food preparation tool being implemented on an exemplary hotdog bun, in accordance with an example embodiment;
FIG. 5B is a perspective front view of the exemplary hotdog bun as prepared by the food preparation tool, in accordance with an example embodiment;
FIG. 6A is a perspective view of the food preparation tool being implemented on an exemplary bagel bun, in accordance with an example embodiment;
FIG. 6B is a perspective front view of the exemplary bagel bun as prepared by the food preparation tool, in accordance with an example embodiment;
FIG. 7A is a perspective view of the food preparation tool being implemented on an exemplary hamburger bun, in accordance with an example embodiment;
FIG. 7B is a perspective front view of the exemplary hotdog bun as prepared by the food preparation tool, in accordance with an example embodiment;
FIG. 8A is a top planar view of the food preparation tool, in accordance with another example embodiment;
FIG. 8B is a top planar view of the food preparation tool in accordance with another example embodiment;
FIG. 8C is a top planar view of the food preparation tool, in accordance with another example embodiment;
FIG. 9A is a perspective view of the exemplary bagel bun along with condiments being included within trenches formed by the food preparation tool, in accordance with an example embodiment; and
FIG. 9B is a front sectional view of the exemplary bagel bun of FIG. 9A encapsulating the condiments, in accordance with an example embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearance of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

### OVERVIEW

Various embodiments of the present disclosure provide a food preparation tool for use on a food item, such as not limited to a bread product. The tool is configured to be a kitchen tool for creating trenches or pockets on the bread product such as but not limited to bagels and buns.

The tool includes a handle adapted to be held by a user. The handle includes a hand support portion configured with indentations for gripping the handle by the user. A first roller is rotatably coupled to a first end of the handle, which includes a plurality of first ridges. The plurality of ridges are configured to form a plurality of first trenches on the bread product, upon application of force on the bread product via the first roller by the user. A second roller is rotatably coupled to a second end of the handle, which includes a plurality of second ridges. The plurality of second ridges are configured to form a plurality of second trenches on the bread product, upon application of force on the bread product via the second roller by the user. The trenches on the bread product enable filings to be suitably encapsulated within the bread product, thereby ensuring a healthier food product and minimizing spillage of the fillings from the bread product.

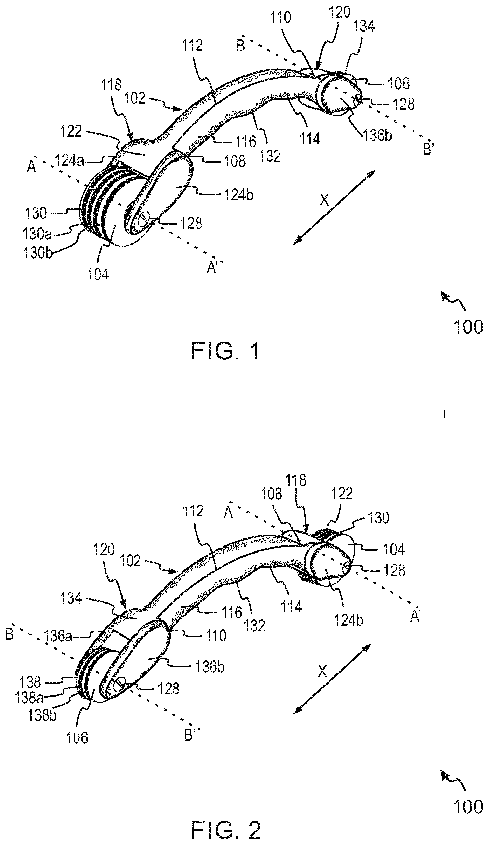

Various embodiments of a food preparation tool 100 for forming trenches on a food item are explained below in a detailed manner, herein with reference to FIG. 1 to FIG. 9A-9B.

FIGS. 1 and 2 in one exemplary embodiment of the present disclosure illustrate a perspective view of the food preparation tool 100. The tool 100 of the present disclosure is implemented as a kitchen tool for preparing a food item. In one embodiment, the tool 100 of the present disclosure is implemented for creating trenches or pockets in the food item, particularly a bread product, like bagels and buns. The bread product requires trenches or pockets for allowing suitable encapsulating of condiments or filling(s) therein. Although the food preparation tool 100 has been described in terms of forming trenches or pockets in the bread product, it may be contemplated that the present tool 100 may be implemented for preparing any other types of food products which may require creating trenches or pockets or troughs therein, without any limitations.

The tool 100 of the present disclosure includes a handle 102 adapted to be held by a user. The handle 102 may be an elongated member with an arcuate shape, extending in a longitudinal direction 'X' between two opposing ends a first end 108 and a second end 110. The arcuate shape enhances grip on the handle 102 to the user during operation. The handle 102 may generally be quadrilateral in cross-section having a top wall 112, a bottom wall 114, and vertically extending opposing side walls 116 joining the top wall 112 and the bottom wall 114. Alternatively, the handle 102 may have a circular cross-section, an elliptical cross-section and the like as per requirement. In general, the handle 102 is sized typically in proportion to the user's hand. That is, the handle 102 is sized so that the present food preparation tool 100 may comfortably be received within the user's palm during operation. The handle 102 is further configured with indentations 132 for enhancing grip on the handle to the user during use or operation. The indentations 132 may be configured to fit fingers of the user or may be in the form of cutouts, notches, dents and the like provided on a surface of the handle 102. The indentations 132 may also be in form of a knurled portion on the surface of the handle 102 (not shown in Figures) for enhancing grip on the handle 102 to the user. In an embodiment, the indentations 132 are provided on the bottom wall 114 of the handle 102. Alternatively, the indentations 132 may also be configured on any of the top wall 112 and the side walls 116 as per design feasibility and requirement.

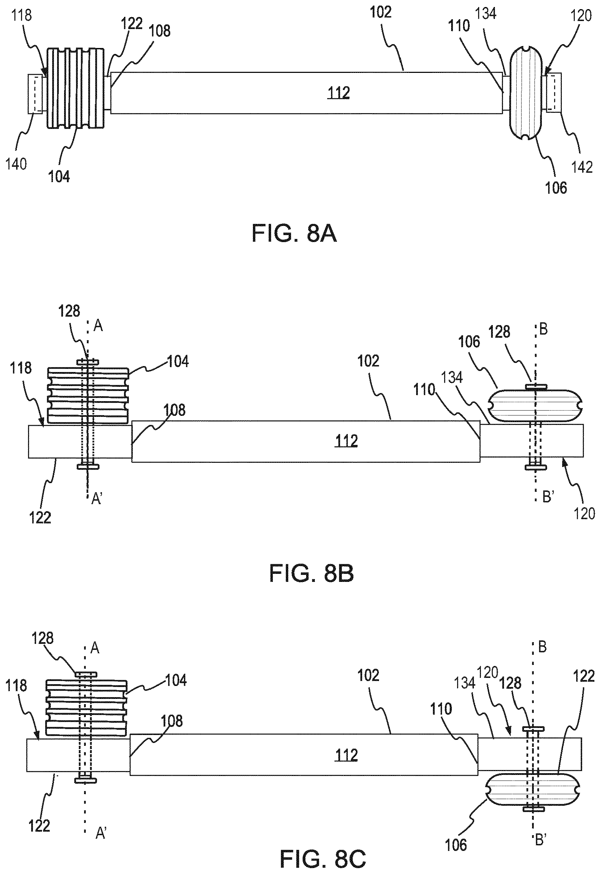

The tool 100 further includes a first roller 104 rotatably coupled to the first end 108 of the handle 102 via a first roller support member 118. The first roller support member 118 may be in the form of a fork (for *e.g.* as shown in FIGS. 1 and 2), a prong, a bearing (for *e.g.* as shown in FIG. 8A) and the like as per requirement, which is explained in detail in the foregoing paragraphs. The first roller support member 118 may be a structure mounted on the handle 102 or may be integrally formed on the handle 102. The first roller support member 118 may be mounted onto the first end 108 of the handle 102 via one of the conventional securing techniques such as the fastening, snap-fitting, riveting and the like. The first roller support member 118 may also be integrally formed on the first end 108 of the handle 102 (for *e.g.* as shown in FIGS. 1, 2 and 8A-8C) via conventional techniques such as the molding process, casting process and the like. In an embodiment, the first roller support member 118 conforms or aligns with the configuration of the handle 102. In an embodiment, the first roller support member 118 aligns angularly with the arcuate configuration of the handle 102, when the handle 102 is in under normal operative disposition.

The first roller support member 118 of the fork type (for *e.g.* as shown in FIGS. 1-4), includes a first shank member 122 mounted to the first end 108 of the handle 102. A pair of first flanges 124a, 124b extend from the first shank member 122 and are oriented away from the longitudinal axis 'X' of the handle 102 to form a fork-like configuration. The flanges 124a, 124b align to the longitudinal axis 'X' of the handle 102, thereby ensuring positioning of the first roller 104 along the same plane as the longitudinal axis 'X'. The first roller 104 is inserted between the flanges 124a, 124b and rotatably coupled thereto via an axle 126. The flanges 124a, 124b are configured with apertures (not shown in Figures) for receiving the axle 126. The axle 126 may be fastened to the flanges 124a, 124b via fasteners 128 such as but not limited to bolts, screws and the like. The axle 126 ensures rotation of the first roller 104 during use of the tool 100 by the user. In this configuration of the first roller support member 118, the first roller 104 is configured to rotate in a direction perpendicular to the longitudinal direction 'X' of the handle 102 and an axis A-A' of the first roller 104 is perpendicular to the longitudinal direction 'X' of the handle 102. Thus, the user is required to operate along the longitudinal direction 'X' of the handle 102 for forming trenches on the bread product. In an embodiment, the axle 126 may be attached to the flanges 122, 124 by any one of conventional securing means such as but not limited to welding, brazing and the like. In an embodiment, the shape of the first shank member 122 may be selected from one of a quadrilateral shape, a circular shape or any other shape as per design feasibility and requirement. In an embodiment, for the first shank member 122 of the quadrilateral shape, the flanges 124a, 124b extend from side surfaces (not shown in Figures) of the first shank member 122. Alternatively, for the first shank member 122 of the circular shape, the flanges 124a, 124b extend from the periphery (not shown in Figures) of the first shank member 122. In an embodiment, the first roller 104 may be adapted to rotate angularly with respect to the longitudinal direction 'X' of the handle 102, corresponding to the inclination at which the first roller 104 is disposed on the handle 102.

The first roller support member 118 of the bearing type (for *e.g.* as shown in FIG. 8A), includes the first shank member 122 having a stepped profile with respect to the handle 102. The dimensions of the stepped profile of the first shank member 122 correspond to the dimensions of a slot (not shown in the Figures) of the first roller 104. That is, if the size of the slot of the first roller 104 is larger than the size of the handle 102, the first shank member 122 is configured with the stepped profile having a larger size than that of the size of the handle 102. Alternatively, if the size of the slot of the first roller 104 is smaller than the size of the handle 102, the first shank member 122 is configured with the stepped profile having a smaller size than that of the size of the handle 102. Upon disposing the first roller 104 on the first shank member 122, a cap member 140 (for *e.g.* as shown in FIG. 8A) is mounted on the first shank member 122 for locking the first roller 104 within the first shank member 122. The cap member 140 may be mounted on the first shank member 122 by one of fastening, snap fitting, welding, brazing or any other conventional securing means as per requirement. In an exemplary embodiment, the cap member 140 is fastened to the first shank member 122, via screw threads (not shown in Figures) configured on the first shank member 122. In this configuration of the first roller support member 118, the first roller 104 is configured to rotate in a direction parallel to the longitudinal direction 'X' of the handle 102 and the axis A-A' of the first roller 104 is parallel to the longitudinal direction 'X' of the handle 102. Thus, the user is required to operate the tool 100 about the longitudinal direction 'X' of the handle 102 for forming trenches on the bread product during operation.

In an embodiment, the first roller 104 may also be pinned directly on one side of the first roller support member 118 (for *e.g.* as shown in FIGS. 8B and 8C) via the axle 126. In this configuration, the first roller support member 118 acts as a seat for the first roller 104. Further, in this configuration of the first roller support member 118, the first roller 104 is configured to axis A-A' of the first roller 104 is perpendicular to the longitudinal direction 'X' of the handle 102. Thus, the user is required to operate the tool 100 along the longitudinal direction 'X' for forming trenches on the bread product during operation.

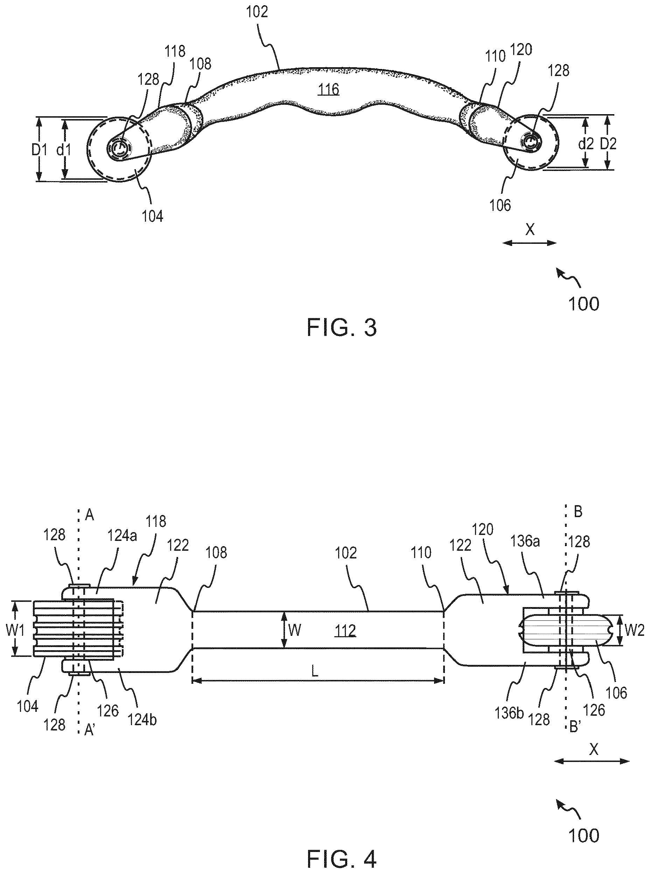

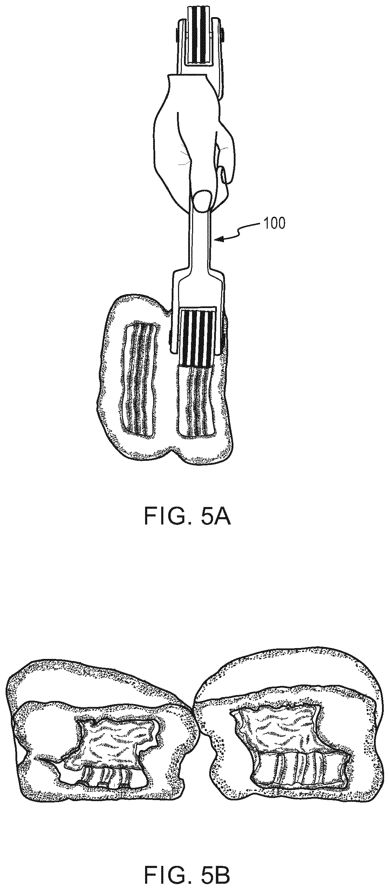

The first roller 104 further includes a plurality of first ridges 130 along its circumference. The first ridges 130 may be in the form of raised strips or protrusions on the surface of the first roller 104. The first ridges 130 may be spaced apart along the width of the first roller 104. The number of first ridges 130 and width between each ridge may vary based on the application of the tool 100. In an embodiment, the first ridges 130 may be of a rectangular shape, so as to produce a flat trench (for *e.g.* as shown in FIG. 5A) on the bread product. Alternatively, the first ridges 130 may be configured in shapes such as but not limited to a V-shape, an arcuate shape or any other shape as per requirement. The first ridges 130 may be selected based on the effectiveness of forming trenches on the bread product. In an embodiment, the first ridges 130 are configured with crests 130a and troughs 130b (for *e.g.* as shown in FIG. 4), wherein the configuration of the crests 130a and troughs 130b are selected based on the depth of the trenches that are required to be formed on the bread product. In an embodiment, larger the distance between the crests 130a and troughs 130b, greater will be the depth of trench formed on the bread product during a single operation of the tool 100 on the bread product. In an embodiment, the first ridges 130 formed on the first roller 104 may be in the form of an acme screw thread configuration, with configuration or parameters of the acme screw thread considered based on the trenches to be formed on the bread product.

The tool 100 further includes a second roller 106 rotatably coupled to the second end 110 of the handle 102 via a second roller support member 120. The second roller support member 120 may be in the form of a fork (for *e.g.* as shown in FIGS. 1 and 2), a prong, a bearing (for *e.g.* as shown in FIG. 8A) and the like as per requirement, which is explained in detail in the foregoing paragraphs. The second roller support member 120 may be a structure mounted on the handle 102 or may be integrally formed on the handle 102. The second roller support member 120 may be mounted onto the second end 110 of the handle 102 via one of the conventional securing means such as fastening, snap-fitting, riveting and the like. The second roller support member 120 may be integrally formed on the second end 110 of the handle 102 (for *e.g.* as shown in FIGS. 1, 2 and 8A-8C) via conventional techniques such as molding processes, casting processes and the like. In an embodiment, the second roller support member 120 conforms or aligns with the configuration of the handle 102. In an embodiment, the second roller support member 120 aligns angularly with the arcuate configuration of the handle 102, when the handle 102 is in under normal operative disposition.

The second roller support member 120 of the fork type (for *e.g.* as shown in FIGS. 1-4), includes a second shank member 134 mounted to the second end 110 of the handle 102. A pair of second flanges 136a, 136b extends from the second shank member 134 and are oriented away from the longitudinal axis 'X' of the handle 102 to form the fork-like configuration. The flanges 136a, 136b align to the longitudinal axis 'X' of the handle 102, thereby ensuring positioning of the second roller 106 along the same plane as the longitudinal axis 'X'. The second roller 106 is inserted between the flanges 136a, 136b and rotatably coupled thereto via the axle 126. The flanges 136a, 136b are configured with apertures (not shown in Figures) for receiving the axle 126. The axle 126 may be fastened to the flanges 136a, 136b via fasteners 128 such as but not limited to bolts, screws and the like. The axle 126 ensures the rotation of the second roller 106 during use of the tool 100 by the user. In this configuration of the second roller support member 120, the second roller 106 is configured to rotate in a direction perpendicular to the longitudinal direction 'X' of the handle 102 and an axis B-B' of the second roller 106 is perpendicular to the longitudinal direction 'X' of the handle 102. Thus, the user is required to operate along the longitudinal direction 'X' of the handle 102 for forming trenches on the bread product. In an embodiment, the axle 126 may be attached to the flanges 136a, 136b by any one of conventional securing means such as but not limited to welding, brazing and the like. In an embodiment, the shape of the second shank member 134 may be selected from one of the quadrilateral shape, the circular shape or any other shape as per design feasibility and requirement. In an embodiment, for the second shank member 134 of the quadrilateral shape, the flanges 136a, 136b extend from side surfaces (not shown in Figures) of the second shank member 134. Alternatively, for the second shank member 134 of the circular shape, the flanges 136a, 136b extend from the periphery (not shown in Figures) of the second shank member 134 (not shown in Figures). In an embodiment, the second roller 106 may be adapted to rotate angularly with respect to the longitudinal direction 'X' of the handle 102, corresponding to the inclination at which the second roller 106 is disposed on the handle 102. In an embodiment, due to the separate connection of the axle 126 with the first roller 104 and the second roller 106, the first roller 104 and the second roller 106 may rotate independently to one another during operation of the tool 100.

The second roller support member 120 of the bearing type (for *e.g.* as shown in FIG. 8A) includes the second shank member 134 having a stepped profile with respect to the handle 102. The dimensions of the stepped profile of the second shank member 134 correspond to the dimensions of a notch (not shown in the Figures) of the second roller 106. That is, if the size of the notch of the second roller 106 is greater than the size of the handle 102, the second shank member 134 is configured with the stepped profile having a larger size than that of the size of the handle 102. Alternatively, if the size of the slot of the second roller 106 is smaller than the size of the handle 102, the second shank member 134 is configured with the stepped profile having a smaller size than that of the size of the handle 102. Upon disposing the second roller 106 on the second shank member 134, a plug member 142 (for *e.g.* as shown in FIG. 8A) is disposed on the second shank member 134 for locking the second roller 106 on the second shank member 134. The plug member 142 may be disposed on the second shank member 122 by one of fastening, welding, brazing or any other conventional securing means as per requirement. In an exemplary embodiment, the plug member 142 is fastened to the second shank member 134, via screw threads (not shown in Figures) configured on the second shank member 134. In this configuration of the second roller support member 120, the second roller 106 is configured to rotate in a direction parallel to the longitudinal direction 'X' of the handle 102 and the axis B-B' is parallel to the longitudinal direction 'X' of the handle 102. Thus, the user is required to operate the tool 100 about the longitudinal direction 'X' of the handle 102 for forming trenches on the bread product during use.

In an embodiment, the second roller 106 may also be pinned directly on one side of the second roller support member 120 (for *e.g.* as shown in FIGS. 8B and 8C) via the axle 126. In this configuration, the second roller support member 120 acts as a seat for the first roller 104. Further, in this configuration of the second roller support member 120, the second roller 106 is configured to axis B-B' of the second roller 106 is perpendicular to the longitudinal direction 'X' of the handle 102. Thus, the user is required to operate the tool 100 along the longitudinal direction 'X' for forming trenches on the bread product during operation. In an embodiment, the first roller 104 and the second roller 106 may be pinned on either side of the handle 102 (for *e.g.* as shown in FIG. 8C).

The second roller 106 further includes a plurality of second ridges 138 along its circumference. The second ridges 138 may be in the form of raised strips or protrusions on the surface of the second roller 106. The second ridges 138 may be spaced apart along the width of the second roller 106. The number of second ridges 138 and the width between each ridge may vary based on the application of the tool 100. In an embodiment, the second ridges 138 may be of a rectangular shape, so as to produce a flat trench (for *e.g.* as shown in FIG. 5A) on the bread product. Alternatively, the second ridges 138 may be configured in shapes such as but not limited to a V-shape, an arcuate shape or any other shape as per requirement. The second ridges 138 may be selected based on the effectiveness of forming trenches on the bread product. In an embodiment, the second ridges 138 are configured with crests 138a and troughs 138b (for *e.g.* as shown in FIG. 4), wherein the configuration of the crests 138a and troughs 138b are selected based on the depth of the trenches that are required to be formed on the bread product. In an embodiment, larger the distance between the crests 138a and troughs 138b, greater may be the depth of trench formed on the bread product during a single operation of the tool 100 on the bread product. In an embodiment, the second ridges 138 formed on the second roller 106 may be in the form of the acme screw thread configuration, with configuration or parameters of the acme screw thread considered based on the trenches to be formed on the bread product.

In an embodiment, the dimensions of the first roller 104 are larger than the dimensions of the second roller 106 (for *e.g.* as shown in FIG. 3). Particularly, the diameter (for *e.g.* as shown in FIG. 3) and width (for *e.g.* as shown in FIG. 4) of the first roller 104 is larger than that of the second roller 106. This configuration of the rollers 104, 106 ensures that the user may choose to form trenches of varying sizes on the bread product during use as per requirement. In another embodiment, the configuration of second ridges 138 on the second roller 106 may differ from that of the first ridges 130 formed on the first roller 104. This configuration enhances the versatility of the tool 100 for forming different types of trenches on the bread product as per user requirement. Further, due to the variation in dimensions of the rollers 104, 106, the configuration of the pair of flanges 124a, 124b may vary correspondingly. That is, for accommodating the larger dimensioned first roller 104, the flanges 124a, 124b may be configured with larger gap therebetween or may be of a divergent type for accommodating the first roller 104. Similarly, the flanges 124a, 124b may be configured with a smaller gap therebetween or may be the convergent type for accommodating the second roller 106 due to its smaller dimensions when compared with the first roller 104. Additionally, it may be contemplated by a person skilled in the art that the present design allows a user to hold the food preparation tool 100 by the handle 102 and by moving the handle 102 against an object, such as a bread bun or the like, may cause one or both of the rollers 104, 106 to be rolled over the object.

In an embodiment, the rollers 104, 106 may be mounted to the handle 102 by means other than the axle 126, such as, for example, a bearing or any other configuration, which allows the rollers 104, 106 to rotate independently of the handle 102.

In an embodiment, the configuration of the cap member 140 and the plug member 142 may be one of a threaded type, a snap-fit type or any other configuration, which serves the purpose of engagement with the shank members 122, 134. In an embodiment, the cap member 140 and the plug member 142 includes internal threads matching with the threads on the shank members 122, 134 for threaded engagement.

In an embodiment, the handle 102 is approximately about 5-7 inches in length 'L' along the longitudinal direction 'X' and about 0.5-0.8 inches in width 'W' (distance between the side walls 116). The top wall 112 of the handle 102 may generally be curved relative to a longitudinal axis of the handle 102. Further, the side walls 116 of the handle 102 may generally be parallel faces, and the arcuate shape may generally resemble a concave shape or a convex shape. In one example, the food preparation tool 100 may have a maximum height of about 2 inches above the ground surface at its peak about the middle of the length 'L, when positioned in an upright disposition with the rollers 104, 106 supported on the ground surface (as represented in FIG. 3). In an embodiment, an inner diameter 'dl' of the first roller 104 is about 1.5 inches and an inner diameter 'd2' of the second roller 106 is about 1.25 inches, while an outer diameter 'Dl' (including the height of the first ridges 130 above the inner diameter 'dl') of the first roller 104 is about 1.625 inches and an outer diameter 'D2' (including the height of the first ridges 130 above the inner diameter 'd2') of the second roller 106 is about 1.375 inches. Also, a width 'W1' of the first roller 104 is about 1 inch and width 'W2' of the second roller 106 is about 0.5 inch, respectively. It may be contemplated that the given dimensions are exemplary only and shall not be construed as limiting to the scope of the present disclosure.

In an embodiment, the components of the tool 100 may be manufactured from a variety of materials as appreciated by one of ordinary skill in the art. In a preferred embodiment, the handle 102 and the rollers 104, 106 may be made of any cooking grade, dishwasher safe and non-toxic materials, such as, but not limited to, stainless steel, aluminum, copper, ceramic-metal composites, or various types of plastics. It may be understood that the plastics may be utilized when it is desired to manufacture a cost-effective end product. The axle 126 and the corresponding fastener 128 may be made of a stainless steel material or the like. Further, the components may be formed in various color combinations without any limitations. Any known manufacturing processes may be implemented for the production of components of the food preparation tool 100 which may later be suitably assembled using known techniques. In some examples, the handle 102 may be formed unitarily by the molding processes, such as blow molding or the like. Further, the rollers 104, 106 may be formed using similar molding processes with the first ridges 130, 138 formed therein, or the first ridges 130, 138 may later be formed by cutting or any other shaping process known in the art.

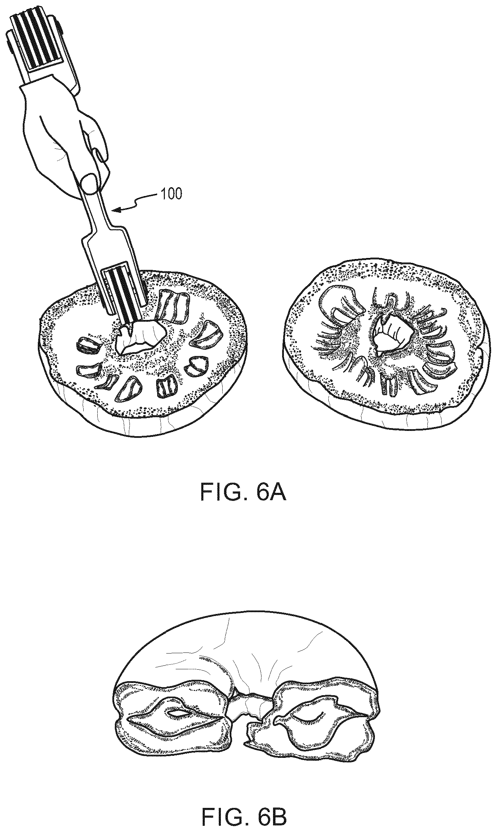

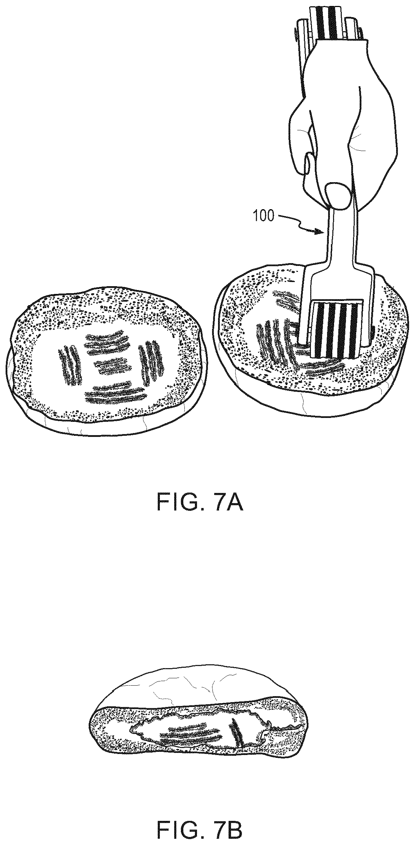

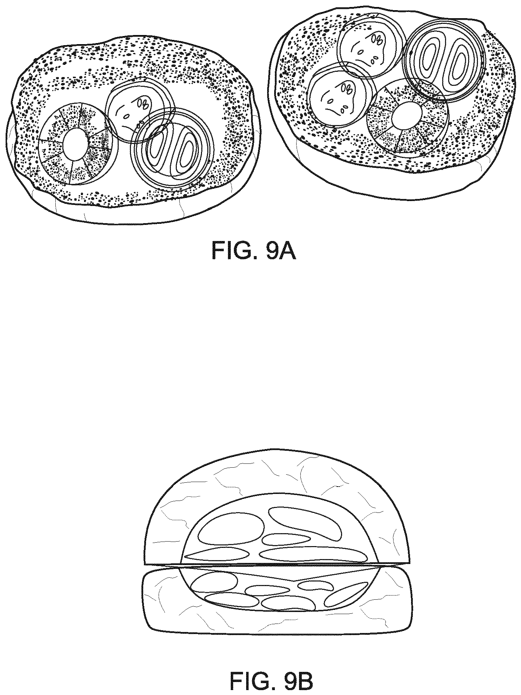

In an embodiment, the tool 100 of the present disclosure may be implemented to create user-preferred trenches, troughs, pockets, or other depressions into the sliced surfaces of the food items inclusive of, but not limited to, the bread product, such as but not limiting to a bagel, a hot dog, a hamburger, a croissant or other types of the bread product. FIG. 5A illustrates the food preparation tool 100 being implemented for creating a trench in a hotdog bun, and FIG. 5B illustrates the resulting hotdog bun (two portions sectioned in half for illustration purposes) with a pocket formed therein. FIG. 6A illustrates the food preparation tool 100 being implemented for creating multiple troughs in a bagel bun, and FIG. 6B illustrates the resulting bagel bun (sectioned in half for illustration purposes) with a continuous pocket formed therein. FIG. 7A illustrates the food preparation tool 100 being implemented for creating a pocket in a hamburger bun, and FIG. 7B illustrates the resulting hamburger bun (sectioned in half for illustration purposes) with a pocket formed therein. The bread product with pockets or depressions forms a receptacle, allowing the user to place a wider variety of fillings and condiments into the receptacle, as illustrated in FIG. 9A. The receptacle, thus allows better containment of fillings and condiments (as shown in FIG. 9B) within the bread product, in comparison to with the conventional flat sliced surfaces of the bread product. The trenches also provide greater absorption of condiments, while maintaining the structural integrity of the bread product. Thus, these trenches food product may lead to a better tasting and potentially healthier food product. The process also promotes less food waste over conventional bread product, due to reduction or complete inhibition of leakage or seeping of the filling and condiments from the bread product during consumption.

In an embodiment, the arced handle 102 may allow operation of the tool 100 in an elbows-down position by the user while seated on a table. Further, the handle 102 with curving indentations on the inside of the arc makes the food preparation tool 100 amenable to gripping. The user may grip anywhere along the arc of the handle 102 for use of comfort or to apply more or less pressure during the pocketing or trenching process. It may be contemplated that the arced handle 102 may be gripped in the arc-up or arc-down position depending on the user's preference. Also, the rollers 104, 106 with the ridges 130 prevent total flattening of the interior of the bread buns. It may be understood that the smaller diameter and narrower roller, like the second roller 106 may primarily be designed for trenching and/or pocketing bagels and other narrow buns; however, if preferred by the user, the second roller 106 may also be used to make narrow trench or pocket configurations in wider bun and bread items also; whereas, the larger diameter and wider roller, like the first roller 104 may primarily be used for making trenches, pockets or both in wider, longer, and round burger or sandwich type buns.

It is to be understood that the present tool 100 may be formed from fewer or more elements. For example, labels, emblems and the like may be embedded into the handle 102 or additional gripping features may be added. Alternatively, the handle 102 may not include gripping portions and may merely consist of a single slab of material, such as plastic or metal. In some alternative examples, the rollers 104, 106 may be spring-loaded with respect to the handle 102 to regulate the forces that may be exerted on the food item when the food preparation tool 100 is used thereon. Further, the handle 102 may have multiple other bulges or depressions disposed along the length thereof, with radius of curvature varying along the length in the longitudinal direction 'X'. Other suitable configurations of the handle 102, commonly known to those of skill in the art, may be utilized without any limitations.

Embodiments of the present disclosure substantially eliminate or at least partially address the aforementioned problems in the background, and provide a tool for creating pockets in baked food items. The food preparation tool 100 of the present disclosure provide for numerous improvements over the food preparation devices, systems, and methods found within the prior art. The present food preparation tool 100 can help with reshaping the interior surface of food products after they have been baked and sliced, which in turn allows more condiment varieties and quantities to be filled therein. The present food preparation tool 100 is designed to be capable of being used by the average person prior to as well as during a mealtime setting. Furthermore, the present food preparation tool 100 provides added advantage of compact size, lightweight, among others. Thus, the present invention fulfills the needs discussed in the background section, and provides other related advantages.

The benefits and advantages described above may relate to one embodiment or may relate to several embodiments. The embodiments are not limited to those that solve any or all of the stated problems or those that have any or all of the stated benefits and advantages.

The above description is given by way of example only and various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A food preparation tool, comprising:
a handle configured to be held by a user;
a first roller configured with a plurality of first ridges and rotatably coupled to a first end of the handle, the plurality of first ridges configured to form a plurality of first trenches on a food item upon application of pressure by the user on the food item via the first roller; and
a second roller configured with a plurality of second ridges and rotatably coupled to a second end of the handle, the plurality of second ridges configured to form a plurality of second trenches on the food item upon application of pressure by the user on the food item via the second roller.

2. The food preparation tool as claimed in claim 1, wherein the handle is configured with an arcuate shape for ease of holding the handle by the user.

3. The food preparation tool as claimed in claim 1, wherein the handle is configured with indentations for enhancing grip on the handle to the user during use.

4. The food preparation tool as claimed in claim 1, further comprising a first roller support member extending from the first end of the handle for rotatably coupling the first roller via an axle.

5. The food preparation tool as claimed in claim 4, wherein the first roller support member comprises:
a first shank member mounted to the first end of the handle; and
a pair of first flanges extending from the first shank member and orienting away from a longitudinal axis of the handle to form a fork like structure, the pair of first flanges rotatably coupling the first roller therebetween via the axle.

6. The food preparation tool as claimed in claim 1, further comprising a second roller support member extending from the second end of the handle for rotatably coupling the second roller via an axle.

7. The food preparation tool as claimed in claim 6, wherein the second roller support member comprises:
a second shank member mounted to the second end of the handle; and
a pair of second flanges extending from the second shank member and orienting away from a longitudinal axis of the handle to form a fork like structure, the pair of second flanges rotatably coupling the second roller therebetween via the axle.

8. The food preparation tool as claimed in claim 1, wherein the food item is a bread product.

9. The food preparation tool as claimed in claim 1, wherein the first roller is configured with a diameter larger than a diameter than the second roller.

10. The food preparation tool as claimed in claim 1, wherein the first roller is configured with a width larger than a width of the second roller.

11. The food preparation tool as claimed in claim 1, wherein the handle, the first roller and the second roller are made of food grade materials.

12. The food preparation tool as claimed in claim 1, wherein the first roller and the second roller are aligned parallelly along a longitudinal axis of the handle.

13. The food preparation tool as claimed in claim 1, wherein the first roller and the second roller are aligned perpendicularly to a longitudinal axis of the handle.
